# EUROPEAN PATENT APPLICATION

(11) **EP 2 330 063 A1**
(43) Date of publication of application: **08.06.2011**
(21) Application number: 10193538.5
(22) Date of filing: 02.12.2010
(51) Int. Cl.: B65G 59/10

(54) **Helical rotating member for grouping or destacking containers**

(30) Priority: 02.12.2009 IT BO20090777
(71) Applicant: STS International S.r.l, 39100 Bolzano (Bozen) (IT)
(72) Inventor: Borghi, Graziano, 40011 ANZOLA EMILIA (BOLOGNA) (IT); Bazzani, Giuliano, 41057, SPILAMBERTO (MODENA) (IT); Turrini, Emilio, 41014 CASTELVETRO (MODENA) (IT); Luccarini, Fabio, 41057 SPILAMBERTO (MODENA) (IT)
(74) Representative: Dall'Olio, Giancarlo

(57) **Abstract**

A circular rotary member (20) is described, for abutting edges of a first plastic container of a stack of plastic containers (21), which containers (21) are inserted one inside another and are moved along a supply line in a direction (U) which is parallel to a rotation axis of the circular rotary member (20), and for enabling advancement of the containers (21) one at a time, comprising a front abutting head being provided with a circular edge which comprises at least a sector for abutting the edges of the first plastic container (21), the at least a sector comprising a first abutting and guiding portion which develops helically in order to abut the first plastic container (21) and to guide the stack of plastic containers (21) in advancement during rotation of the circular rotary member (20).

## Description

### DESCRIPTION OF THE INVENTION

The invention relates to the technical sector relating to packing containers made of plastic material partially insertable in one another, such as for example beakers.

The present invention relates in particular to a circular rotary member for abutting edges of plastic containers inserted one in another and supplied along a supply line, and for enabling advancing of the containers one at a time along the line, such as to enable grouping of a predetermined number of containers.

European patent EP 0.302.837, in the name of the Applicant, discloses a rotary disc, illustrated in figure 1A, arranged along a container supply line at a grouping station 5 which is located downstream of an edge bander (for realising edges of the containers) and upstream of a packing station. The grouping station 5 is provided for grouping the containers from each stack F of containers 10 which is supplied along the line.

The disc 6 is arranged above a conveyor belt organ 3 which supports and moves the container along the line 2 in a predetermined advancement direction W.

The disc 6 comprises a front head for abutting the containers of the stack F of containers advancing along the line and the circular edge of the head comprises a series of sectors 8. Each sector 8 comprises, in turn, a portion of surface having a helical development for abutting the edge of the first container 11 of the stack F of containers 10 in advancement along the line; the portion of abutting surface is therefore curved.

The disc 6 is activated to rotate, with respect to an axis 7 thereof, in a predetermined rotation direction R and the abutting surface portion of a first sector encounters the first container 11 in the stack F, enabling it to be advanced along the predetermined advancement direction W in consequence of its helical development; thereafter the portion of abutting surface of a second sector 8, adjacent to the first, inserts between the edge of the first container 11 and the edge of a following second container 12 of the stack F of containers 10 advancing along the line 2, encountering the edge of the second container 12 such as to separate the first container 11 and the second container 12 of the stack F.

The contact of the abutting surface with the edge of the container at the head of the stack F is done at an edge of the helical abutting surface. The edge of the helical abutting surface, on encountering the edge of the head beaker in the row F, removes the working burrs of the edging tool of the edge bander, which burrs are present thereon and consequently generates waste which inserts into the container 10 and remains inside the pack in which the containers 100 are inserted, causing a quality defect.

The disc 6 performs a predetermined number of rotations such as to separate a predetermined number P of containers 10 from the stack F and form, downstream of the disc 6, a container group P partially inserted one into another.

The group of containers P is then pushed forward distancingly from the disc 6 by means of a gust of air emitted from a pair of nozzles 17, arranged laterally of the stack F of containers.

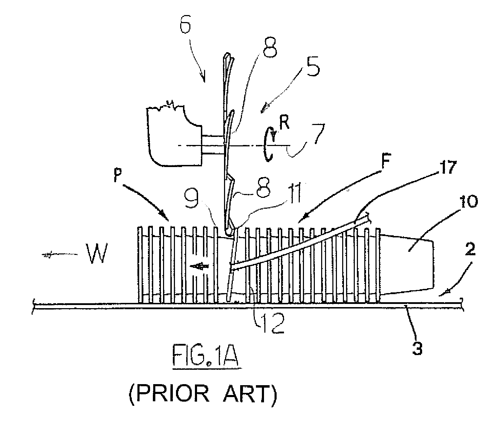

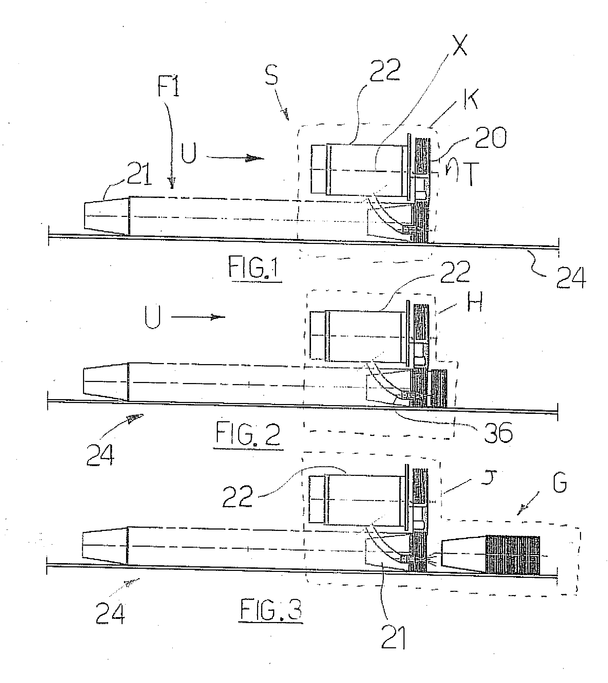

The last beaker 9 of the group of selected containers P, with reference to the predetermined advancement direction W, is partially inserted in the first beaker 11 of the stack of containers F upstream of the disc 6 (see figure 1A).

The containers, at the grouping station 5, are still hot following the previous step of formation of the edges thereof, by means of the edge bander machine.

The head beaker 11 of the stack F, upstream of the disc 6, tends to deform when it is abutted by the edge of the abutting portion of the sector 8 as the plastic material it is made of is very deformable when hot and the contact area between the abutting portion of the sector 8 of the disc 6 and the edge of the container 11 is rather limited; so the container 11, subjected to a high contact pressure in the edge region in which the contact between the abutting portion of the second of the disc 6 takes place, becomes arranged slightly inclined (as illustrated in figure 1A), rather than perpendicular, with respect to the horizontal plane of the belt of the conveyor belt 3.

This reduces the efficiency, or indeed renders useless, the blowing action of the nozzles 17, as the first or head container 11 of the stack F, being inclined, retains the group P of containers grouped downstream of the disc 6 and can cause, as a consequence, a blocking and halting of the grouping station 5.

The aim of the present invention is to provide a solution which obviates the above-cited drawbacks, i.e. it provides a technical solution for grouping plastic containers from a stack in which they are partially inserted in one another, which enables the formation of waste to be avoided and also reduces the probability of blocking.

The aims are obtained by means of a circular rotating member for abutting the edges of a first plastic container of a stack of plastic containers which are inserted in one another and which are moved along a supply line, in accordance with claim 1, and by means of a grouping device, in accordance with claim 7.

The circular rotating member for abutting the edges of a first plastic container of a stack of plastic containers, which are inserted in one another and which are moved along a supply line in a parallel direction to the rotation axis of the circular rotating member, and for enabling advancement of the containers one at a time, comprises a front abutting head of the edges of a first plastic container of a stack of plastic containers, which are inserted on in another and which are moved along a line in a direction that is parallel to the rotation axis of the circular rotating member, which front abutting head is provided with a circular edge comprising at least a sector for abutting the edges of the first plastic container, the at least a sector comprising a helically-developing first abutting and guiding portion for encountering the first plastic container such as to guide in advancement the stack of plastic containers during the rotation of the circular rotating member; the at least a second sector comprising at least a second portion, connected to an end of the first abutting and guiding means, provided with an abutting surface which lies in a plane that is perpendicular to the rotation axis of the circular rotating member and which is dimensioned such as to abuttingly receive the edges of the advancing first plastic container.

The circular rotating member advantageously enables grouping a predetermined group of containers from a stack of containers preventing waste from being produced during the grouping stage; the abutting surface of the second portion is actually arranged on a perpendicular plane to the advancement direction of the first beaker of the stack of containers and, consequently, the contact occurs between a flat surface and the edge of the first beaker and not between an edge thereof and the edge of the beaker, as occurs in known-type solutions.

Further, the abutting surface of the second portion enables preventing the first beaker in the stack from being arranged inclined with respect to the support plane, as, being arranged perpendicularly of the advancement direction, the area of contact between the rotating member and the first beaker is maximised and, consequently, the contact pressure between the container and the rotating member is minimised, preventing the rotating member from deforming and interfering with the containers downstream of the disc, with a consequent blocking of the grouping device of which the circular rotating member is a part.

The device for grouping plastic containers starting from a stack of plastic containers that are inserted in one another comprises: first movement means for moving a stack of plastic containers, inserted one in another, along a supply line in a predetermined direction and advancement direction; second movement means arranged at a grouping station located along the supply line, for moving a group of containers in the advancement direction; the circular rotary member of one of the claims from 1 to 6 being arranged at the grouping station S with a rotation axis thereof parallel to the advancement direction and activated in phase relation with the first movement means and the second movement means such as to abut the edges of a first plastic container of the stack of plastic containers such as to guide the plastic containers in advancement in the advancement direction and to form, downstream of the circular rotary member, the group of containers; the second movement means being arranged such as to act on the edge of a final container of the group G of containers in phase relation with a release of the final container by the first abutting and guiding portion of the sector of the circular rotary member.

Specific embodiments of the invention, and advantageous technical-functional characteristics correlated to the embodiments only in part derivable from the above-cited description, will be described in the following description, according to what is reported in the claims and with the aid of the accompanying tables of the drawings, in which:
figure 1A is a schematic lateral view of a device of known type for grouping containers from a stack in which the containers are inserted in one another;
figures 1, 2 and 3 are a schematic lateral view of the device of the present invention, for grouping containers from a stack in which the containers are inserted into one another, respectively in different operating steps;

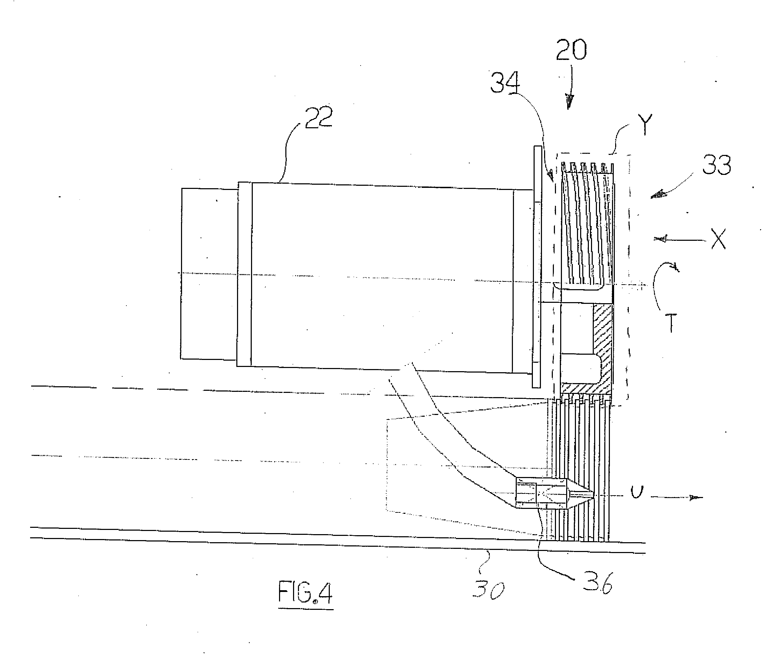

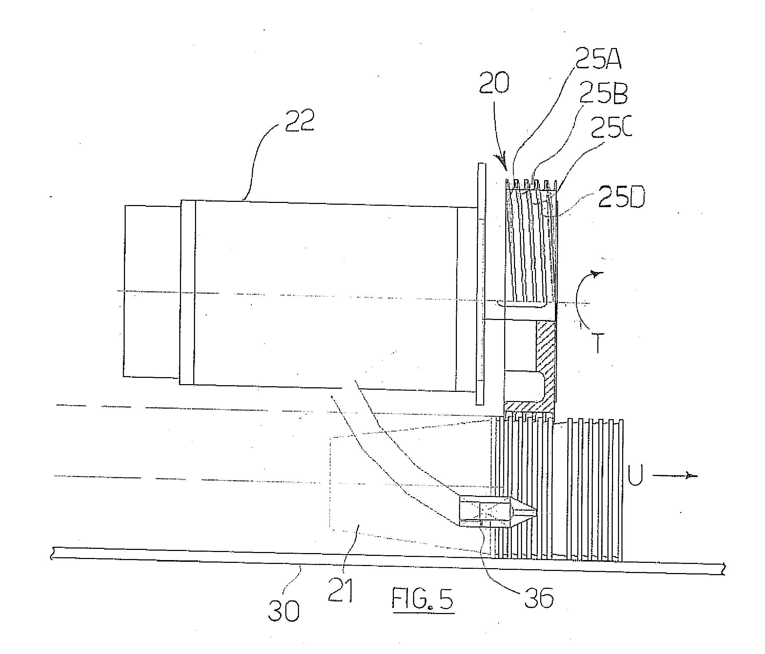

figures 4, 5, 6 illustrate, in an enlarged scale, respectively details K, H, J of figures 1, 2 and 3;
figures 7A and 7B are front views in enlarged scale of the circular rotary member, i.e. detail Y of figure 4, respectively according to observation direction X and in the opposite direction thereto;
figure 8 is a section view of the circular rotary member of the cutting plane VIII-VIII of figure 7A;
figure 9 illustrates, in smaller scale and in a perspective view, the circular rotary member of figure 4.

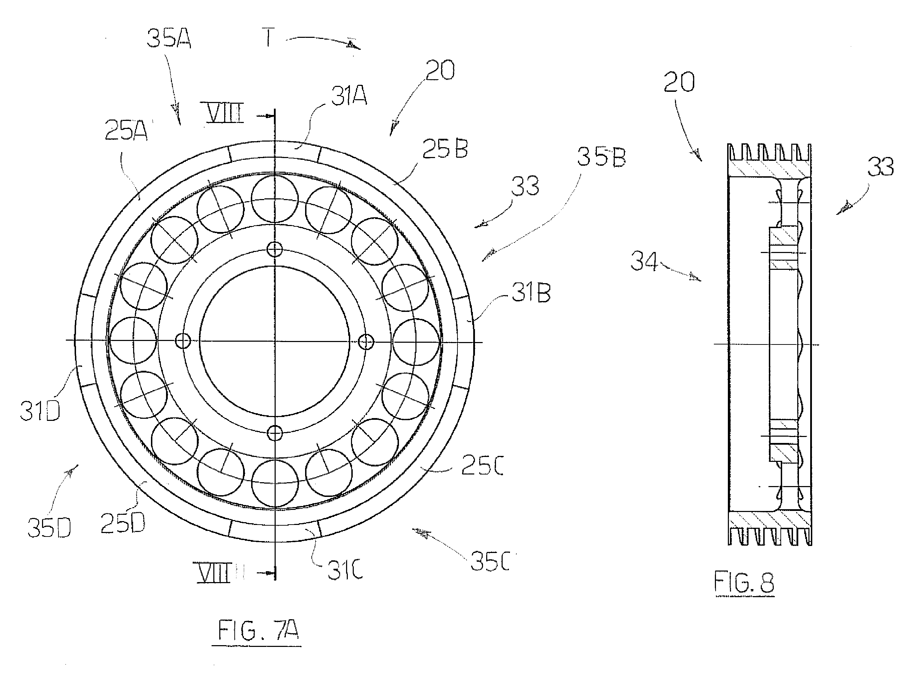

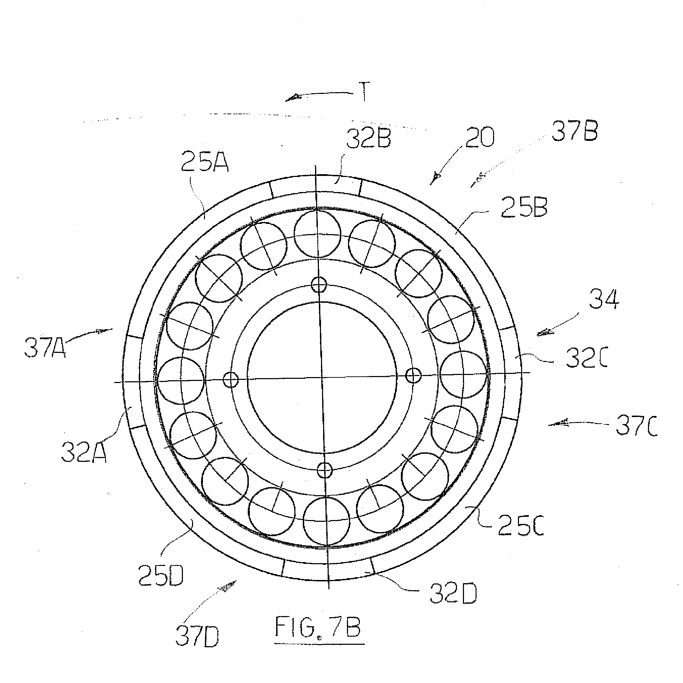

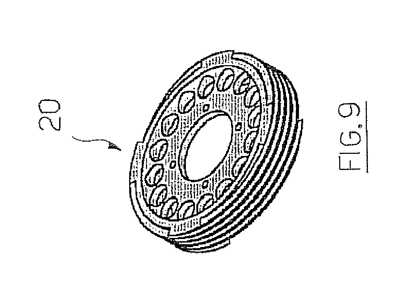

The circular rotary member 20, object of the present invention and illustrated in figures 7A-B, 8 and 9, is formed by a cylinder comprising a lateral surface, a front abutting head 34 and a rear head 33.

The front abutting head 34 of the plastic container edges 21 is provided with a circular edge which comprises four sectors 37A, 37B, 37C, 37D, equidistanced angularly, for encountering the edges of the plastic containers 21.

Each sector 37A, 37B, 37C, 37D, of the front abutting head 34 comprises: a helically-developing first abutting and guiding portion 25A, 25B, 25C, 25D and a second portion 32A, 32B, 32C, 32D, connected to the first abutting and guiding portion 25A, 25B, 25C, 25D, the surface of which, destined to abut the edge of the containers lies in a perpendicular plane to the axis X of the circular rotary member 20 and is connected to an end of the first abutting and guiding portion 25A, 25B, 25C, 25D.

The cylinder 20 is arranged at a grouping station S distance along a supply line of the containers 21 which are inserted one inside another, for example located along a supply line downstream of the outlet of an edge bander; the cylinder 20 is arranged with an axis that is parallel to the axis X that is parallel to the advancement direction U of the stack of containers along the line, is rotatably supported (figure 1) and is activatable in rotation in a predetermined rotation direction T by means of activating organs 22, for example by means of a motor.

The cylinder 20 is arranged above the first movement means 24 destined to move a stack of containers along the line in the advancement direction U, comprising a conveyor belt organ 30 which supports and moves the stack of containers 21.

A pair of nozzles 36 is also arranged at the grouping station S, each nozzle being arranged on a side of the line for moving a portion of containers of the stack which have been advanced by the cylinder 20 along the predetermined advancement direction U, which portion constitutes a group G of containers 21 downstream of the cylinder 20.

The first abutting and guiding portions 25A, 25B, 25C, 25D of each sector 37A, 37B, 37C, 37D develops substantially helically on the lateral surface of the cylinder 20, such that the first abutting and guiding portions 25A, 25B, 25C, 25D of the cylinder 20 constitute, overall, a four-start threading.

The rear head 33 of the cylinder 20 is substantially identical to the front abutting head 34, i.e. each circular edge of the rear head 33 is subdivided into four sectors, each of which comprises the first abutting and guiding portion 25A, 25B, 25C, 25D which develops starting from the edge of a sector 35A, 35B, 35C, 35D of the front abutting head 34 and a third portion 31A, 31B, 31 C, 31 D connected to the first abutting and guiding portion 25A, 25B, 25C, 25D and the abutting surface thereof with the containers is arranged substantially perpendicularly to the axis X of the cylinder 20.

In the following an illustration will be made of the rotary member 20 object of the present invention, with reference to the grouping of a predetermined number G of containers 21 from a stack F1 of containers supplied along the line.

The cylinder 20 is activated in rotation, in continuous motion, in the predetermined rotation direction T and the belt 30 moves the stack of containers F1 towards the cylinder 20 in the supply direction U.

The abutting surface of the second portion of a sector of the circular edge of the front abutting head 34 of the cylinder 20, for example the surface of the second portion 32A of the first sector 37A, anteriorly abuts, with reference to the advancement direction of the stack of containers U, the edge of the first container of the stack F1 advancing on the belt 30.

During the rotation of the cylinder 20, the edge of the first container 21 of the stack F1 abuts against the abutting surface of the second portion 32A of the first sector 37A and then is abutted and guided by the first abutting and guiding portion 25A of the first sector 37A; the first portion 25A, as already specified, develops helically and thus guides and enables advancement of the first container along the predetermined advancement direction U.

When the cylinder 20 has performed a ¼ revolution rotation, the second portion 32B of the second sector 37B inserts in the region comprised between the edge of the first container, which is already guided in advancement by the first portion 25A of the first sector 37A of the cylinder 20, and the edge of the second container of the stack in advancement along the line which is consecutive to the first. Subsequently the edge of the second container 21 of the stack F1 abuts against the abutting surface of the second portion 32B of the second sector 37B and is then abutted and guided by the first abutting and guiding portion 25B of the second sector 37B.

The cylinder 20, as it rotates, enables advancing and guiding each container 21 of the stack that it has abutted along the predetermined advancement direction U, up until it releases the container when the third portion 31A, 31B, 31C, 31 D of the rear head 33 releases the contact with the edge of the container; the containers 21 are released one by one downstream of the cylinder 20, partially inserted one inside another and forming a group G.

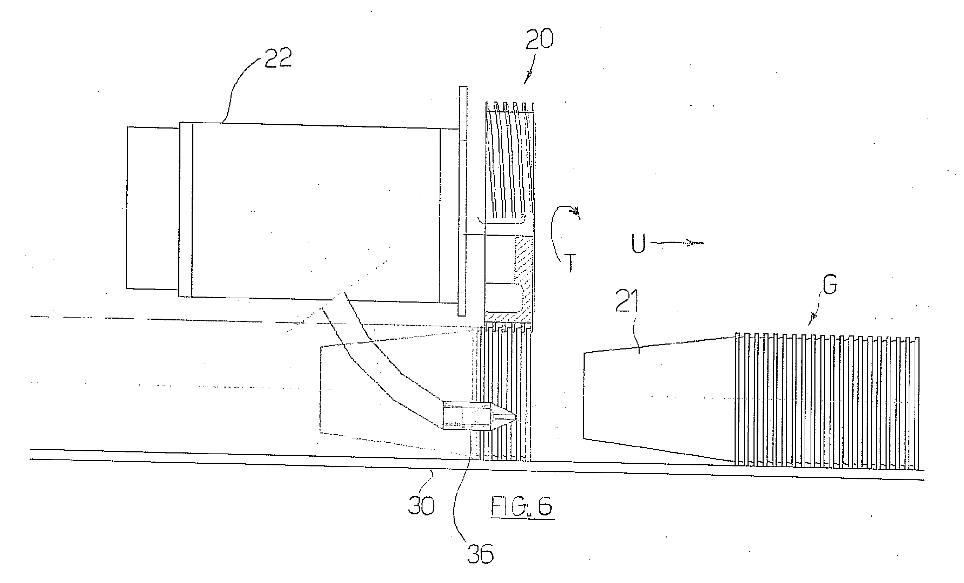

Following the formation of the group G of containers downstream of the cylinder 20, the pair of nozzles 36 is activated such that a gust of pressurised air strikes, from both facing sides of the line, the edge of the last of the containers of the predetermined group G of containers such as to move the group G away from the grouping station S, in the predetermined advancement direction U, as illustrated in figure 6.

The nozzles 36 enable movement of the container group 21 downstream of the cylinder 20 without any blockage taking place, as the remaining containers 21 in the stack, which are not a part of the group G, are guided by the cylinder 20 and are consequently arranged correctly, i.e. not inclined as in the known-type solution previously described.

Consequently the remaining containers of the stack F1 do not obstruct the movement of the group G of containers formed downstream of the cylinder 20.

Further, the abutting surface of the third portion 31A, 31B, 31C, 31 D of the rear head 33 enables release of each container 21, arranging the container 21 with the axis thereof parallel to the advancement direction U, as the surface, which is the last to encounter the upper edge of each container advanced by the rotary member, is arranged perpendicular to the advancement direction U of the containers.

The rotation velocity of the cylinder 20 is correlated to the operating velocity of the belt 30; the cylinder 20, being provided with four sectors 37A, 37B, 37C, 37D, can be activated advantageously with a rotation velocity that is four times slower than the velocity which a cylinder 20 with only one sector would necessarily have, given a same activating velocity of the belt 30.

In the preferred embodiment, each first abutting and guiding portion 25A, 25B, 25C, 25D can develop helically at any angle of the helix, as long as the angle enables the cylinder 20 to advance the containers 21 in the advancement direction U.

Further, the first abutting and guiding portions 25A, 25B, 25C, 25D of the plurality of sectors 8 can be wound helically on the external surface of the cylinder 20 according to any reciprocal spatial arrangement, i.e. with any axial step between the first portions, as long as the arrangement enables the cylinder 20 to advance the containers 21 in the advancement direction U and as long as each first abutting and guiding portion 25A, 25B, 25C, 25D does not intersect the others.

In a further embodiment, not illustrated in the figures of the drawings, the cylinder comprises one sector alone.

In the further embodiment, the cylinder, given a same activation velocity as the belt of the first movement means, has to rotate more rapidly with respect to the preferred embodiment, described herein above, as there is only a single sector for abutting the edges of the containers of the stack of containers being advanced.

At each full revolution the cylinder abuts a container such as to advance and guide it along the predetermined advancement direction.

In a further variant, not illustrated in the figures, the rotary member is a disc.

The front abutting head of the disc can comprise, at the edge thereof, a single sector or a plurality of sectors, with each sector comprising a first abutting and guiding portion having a helical development and a second portion, connected to the first abutting and guiding portion, an abutting surface thereof with the containers lies in a perpendicular plane to the rotation axis of the disc.

The disc possesses the same advantageous technical-functional characteristics as described with reference to the preferred embodiment.

The foregoing description illustrates a device for grouping plastic containers 21 starting from a stack of plastic containers 21 that are inserted one in another, comprising: first movement means 24 for moving a stack of plastic containers 21, inserted one in another, along a supply line in a predetermined direction and advancement direction U; second movement means 36 arranged at a grouping station S located along the supply line, for moving a group G of containers 21 in the advancement direction U to the grouping station S; the circular rotary member 20 being arranged at the grouping station S with a rotation axis X thereof parallel to the advancement direction U and activated in phase relation with the first movement means 24 and the second movement means 36 to abut the edges of a first plastic container 21 of the stack of plastic containers 21 such as to guide the plastic containers 21 in advancement in the advancement direction U and to form, downstream of the circular rotary member 20, the group G of containers 21; the second movement means 36 being arranged such as to act on the edge of a final container of the group G of containers 21 in phase relation with a release of the final container 21 by the first abutting and guiding portion 25A, 25B, 25C, 25D of the sector 37A, 37B, 37C, 37D of the circular rotary member 20.

The first movement means 24 comprise, as schematically illustrated in figures 1, 2 and 3, the conveyor belt organ 30; in further variants of the device the first movement means 24 comprise pusher organs, destined to push the stack of containers towards the circular rotary member.

The second movement means comprise a compressed air source (not illustrated) and a pair of nozzles 36 connected to the compressed air source and arranged respectively at opposite sides of the supply line at the grouping station S for applying a jet of air on the edge of the final container of the group and moving the container group in a distancing direction from the grouping station; further variants comprise second movement means of a mechanical type destined to move the further container of the container group according to the advancement direction in a distancing direction from the grouping station.

The above is described by way of non-limiting example, and any eventual constructional variants are understood to fall within the ambit of protection of the present technical solution, as described herein above and as claimed in the following claims.

## Claims

1. A circular rotary member (20) for abutting edges of a first plastic container of a stack of plastic containers (21), which containers (21) are inserted one inside another and are moved along a supply line in a direction (U) which is parallel to a rotation axis (X) of the circular rotary member (20), and for enabling advancement of the containers (21) one at a time, comprising a front abutting head (34) of edges of a first plastic container (21) of a stack of plastic containers (21), which are inserted one inside another and moved along a line in a direction (U) which is parallel to the rotation axis (X) of the rotary circular member (20), the front abutting head (34) being provided with a circular edge which comprises at least a sector (37A, 37B, 37C, 37D) for abutting the edges of the first plastic container (21), the at least a sector (37A, 37B, 37C, 37D) comprising a first abutting and guiding portion (25A, 25B, 25C, 25D) which develops helically in order to abut the first plastic container (21) and to guide the stack of plastic containers (21)in advancement during rotation of the circular rotary member (20), **characterised in that** the at least a sector (37A, 37B, 37C, 37D) further comprises a second portion (32A, 32B, 32C, 32D) connected to an end of the first abutting and guiding portion (25A, 25B, 25C, 25D) which second portion (32A, 32B, 32C, 32D) is provided with an abutting surface which lies in a plane that is perpendicular to the rotation axis (X) of the circular rotary member (20) and which is of such a size as to abuttingly receive edges of the first plastic container (21) in advancement.

2. The circular rotary member of the preceding claim, **characterised in that** the abutting surface of the second portion (32A, 32B, 32C, 32D) is also of such dimensions that a contact area between the abutting surface of the second portion (32A, 32B, 32C, 32D) and the edges of the first plastic container (21) in advancement is maximised when the abutting surface of the second portion (32A, 32B, 32C, 32D) abuttingly receives the edges of the plastic container (21).

3. The member of any one of the preceding claims, **characterised in that** the circular edge of the front abutting head (34) comprises a plurality of sectors (37A, 37B, 37C, 37D) which are angularly equidistanced from one another.

4. The member of any one of the preceding claims, **characterised in that** the member is a disc.

5. The member of any one of claims from 1 to 3, **characterised in that** the member is a threaded cylinder (20) in which the first abutting and guiding portion (25A, 25B, 25C, 25D) of each sector (37A, 37B, 37C, 37D) develops helically along a thickness of the threaded cylinder (20) in order to form at least a part of the relative threading thereof.

6. The member of any one of the preceding claims, **characterised in that** it comprises a rear head (33) which is identical to the front abutting head (34).

7. A device for grouping plastic containers (21) starting from a stack of plastic containers (21) which are inserted one in another, **characterised in that** it comprises first movement means (24) for moving a stack of plastic containers (21), inserted one in another, along a supply line in a predetermined direction and advancement direction (U); second movement means (36) arranged at a grouping station (S) located along the supply line, for moving a group (G) of containers (21) in the advancement direction (U); the circular rotary member (20) of one of the preceding claims being arranged at the grouping station (S) with a rotation axis (X) thereof parallel to the advancement direction (U) and activated in phase relation with the first movement means (24) and the second movement means (36) to abut the edges of a first plastic container (21) of the stack of plastic containers (21) such as to guide the plastic containers (21)in advancement in the advancement direction (U) and to form, downstream of the circular rotary member (20), the group (G) of containers (21); the second movement means (36) being arranged such as to act on the edge of a final container of the group (G) of containers (21) in phase relation with a release of the final container (21) by the first abutting and guiding portion (25A, 25B, 25C, 25D) of the sector (37A, 37B, 37C, 37D) of the circular rotary member (20).

8. The device of the preceding claim, **characterised in that** the first movement means (24) comprise a conveyor belt (30).

9. The device of claim 7 or 8, **characterised in that** the second movement means (24) comprise a compressed air source and a pair of nozzles (36), the nozzles (36) of the pair of nozzles being connected to the compressed air source and being arranged respectively at opposite sides of the supply line at the grouping station (S) in order to apply a jet of air onto the edge of the final container of the group (G).

10. Use of the device of one of claims from 7 to 9, wherein the device is arranged downstream of an outlet of an edge banding machine.
